**Europäisches Patentamt**

**European Patent Office**

**Office européen des brevets**

(11) Numéro de publication: **0 102 262**

**B1**

(12) **FASCICULE DE BREVET EUROPÉEN**

(45) Date de publication du fascicule du brevet: **10.06.87**

(21) Numéro de dépôt: **83401372.4**

(22) Date de dépôt: **04.07.83**

(51) Int. Cl.⁴: **G 01 J 5/06, F 17 C 3/08**

(54) **Dispositif cryostatique de faibles dimensions pour photodétecteurs.**

(30) Priorité: **16.07.82 FR 8212467**

(43) Date de publication de la demande:
**07.03.84 Bulletin 84/10**

(45) Mention de la délivrance du brevet:
**10.06.87 Bulletin 87/24**

(84) Etats contractants désignés:
**DE GB IT SE**

(56) Documents cité:
**US-A-3 080 542**
**US-A-3 259 865**
**US-A-3 851 173**
**US-A-4 059 764**
**US-A-4 206 354**

**W. FASTOWSKI et al.: "Kryotechnik", 1970, pages 312-321, chapitre 7.3 "Kryostaten", Akademie-Verlag, Berlin, DE.**

(73) Titulaire: **THOMSON- CSF, 173, Boulevard Haussmann, F-75379 Paris Cedex 08 (FR)**

(72) Inventeur: **Meignin, Jacques, THOMSON- CSF SCPI 173, bld Haussmann, F-75379 Paris Cedex 08 (FR)**
Inventeur: **Mollaret, Daniel, THOMSON- CSF SCPI 173, bld Haussmann, F-75379 Paris Cedex 08 (FR)**
Inventeur: **Prost, Roger, THOMSON- CSF SCPI 173, bld Haussmann, F-75379 Paris Cedex 08 (FR)**

(74) Mandataire: **Ruellan- Lemonnier, Brigitte, THOMSON- CSF SCPI 19, avenue de Messine, F-75008 Paris (FR)**

## Description

La présente invention concerne un dispositif cryostatique de faibles dimensions pour photodétecteurs.

Afin de présenter une sensibilité la plus grande possible aux rayonnements, certains détecteurs tels que les détecteurs infrarouges doivent fonctionner à une température ambiante très basse. Pour obtenir ce résultat, les détecteurs sont en général montés dans des dispositifs cryostatiques du type comportant un doigt porte a très basse température sur lequel sont montés le ou les détecteurs à refroidir et qui est entouré par une paroi formant avec ledit doigt une enceinte étanche. La paroi est munie sur la partie faisant face aux détecteurs d'une fenêtre réalisée en un matériau transparent aux rayonnements à détecter. L'enceinte est d'autre part mise sous vide, en général à l'aide d'un queusot de pompage, dans le but d'éviter les pertes thermiques autour du doigt froid. Dans les dispositifs de l'art antérieur tel que celui décrit dans le brevet US-A- 4 206 354, le doigt froid est réalisé de manière conventionnelle en verre, la paroi externe étant réalisée en verre ou en métal. L'utilisation du verre entraine certains problèmes. Ainsi du fait de sa malléabilité à chaud, le dispositif cryostatique se déforme facilement lors du scellement des deux parties et il est difficile d'obtenir des dimensions précises. D'autre part, l'usinage et la rectification du verre sont des opérations délicates. Il est donc difficile de réaliser à moindre coût un dispositif cryostatique dont la paroi externe puisse servir de face de positionnement. En conséquence, il est nécessaire d'utiliser des pièces supplémentaires pour le positionnement du dispositif cryostatique. Ainsi, de manière habituelle, le dispositif cryostatique est monté dans une pièce mécanique précise s'emboitant sur la paroi externe du dispositif cryostatique proprement dit. Toutefois, cette pièce mécanique accroit la masse et l'encombrement du dispositif cryostatique.

Comme décrit dans le brevet US-A- 3 259 865, il est aussi connu de réaliser le doigt froid et la paroi externe en métal, l'embase entre le doigt et la paroi étant réalisee en alumine.

D'autre part, les détecteurs sont connectés au système de traitement par des conducteurs dont le nombre est fonction du nombre de détecteurs montés dans le dispositif cryostatique. Or les conducteurs doivent traverser, de manière étanche, l'enceinte du dispositif cryostatique. Ceci peut être réalisé de nombreuses manières soit au niveau du scellement entre les deux pièces constituant le doigt et la paroi externe soit en passant directement à travers le verre ou le métal de la paroi externe. Dans le cas d'un passage au niveau du scellement, il est nécessaire d'utiliser une pièce supplémentaire isolante, en général, en polyimide sur laquelle sont gravés les conducteurs. De plus, pour éviter tous risques de court-circuit, l'intervalle entre deux conducteurs doit être suffisant ce qui limite le nombre de conducteurs en sortie en fonction du périmètre externe du doigt. D'autre part, dans le cas d'un passage à travers une paroi métallique, le conducteur métallique passe à travers une bille de verre qui l'isole de la paroi. En fait, tous ces éléments conduisent à accroître les dimensions du dispositif cryostatique ou à limiter le nombre des sorties.

Or les détecteurs infrarouges, en particulier, sont de plus en plus utilisés dans des matériels dits "embarqués". On a donc cherché à réduire au maximum l'encombrement et le poids du dispositif cryostatique.

La présente invention a, en conséquence, pour but la réalisation d'un dispositif cryostatique pour photodétecteurs qui présente des dimensions réduites par rapport aux dispositifs de l'art antérieur.

La présente invention a aussi pour but la réalisation d'un dispositif cryostatique pour photodetecteurs qui ne necessite pas l'utilisation d'une pièce de positionnement supplémentaire.

La présente invention a encore pour but la réalisation d'un dispositif cryostatique pour photodétecteurs présentant une durée de vie importante malgré ses faibles dimensions du fait de l'obtention d'un vide relativement élevé et stable.

La présente invention a de même pour but la réalisation d'un dispositif cryostatique de faibles dimensions pour photodétecteurs comportant un nombre élevé de conducteurs en sortie ce qui permet de refroidit un nombre élevé de photodétecteurs.

La présente invention a en conséquence pour objet un dispositif cryostatique dans lequel les divers éléments constituant le dispositif cryostatique proprement dit sont réalisés en des matériaux présentant des propriétés mécaniques stables permettant un usinage ou un moulage précis de ces éléments.

Le dispositif cryostatique de faibles dimensions pour photodétecteurs conforme à la présente invention comporte un doigt porté à très basse température sur l'extrémité duquel est fixé au moins un détecteur, une embase en un matériau difficilement déformable sur laquelle est scellé le doigt de manière à permettre le passage des conducteurs électriques et une paroi montée sur l'embase et entourant le doigt froid pour former avec lui une enceinte sous vide, une fenêtre en un matériau transparent aux rayonnements à détecter étant fixée sur la paroi en face du détecteur et il est caractérisé en ce que le doigt froid est réalisé en une céramique étanche ou étanchée à faible conductivité thermique, du type choisi parmi la forstérite, la zircone, la mullite, la stéatite et similaire, l'embase étant réalisée en un matériau isolant à coefficient de dilatation thermique du même ordre de grandeur que celui de la céramique du doigt.

Dans le cas d'une céramique poreuse telle qu'une stéatite poreuse, celle-ci peut être rendue étanche par émaillage.

De préférence, l'embase est elle-aussi réalisée en céramique. Il est dans ce cas très facile de réaliser un scellement minéral étanche entre le doigt et l'embase.

Selon une caractéristique d'un autre mode de réalisation de la présente invention, le contour périphérique externe de l'embase est utilisé comme moyen de positionnement. De ce fait, ce contour est, de préférence, de forme polygonale ou de révolution et présente un index de positionnement.

Selon une caractéristique supplémentaire d'une forme d'exécution particulière de la présente invention, les conducteurs sont déposés directement sur le doigt froid par enduction, projection, tremper ou évaporation sous vide. Pour faciliter le positionnement des conducteurs, la surface externe du doigt froid peut être cannelée.

Selon encore une autre forme d'exécution de la présente invention, la paroi externe du dispositif cryostatique est réalisée en une céramique, un métal ou un alliage métallique présentant un coefficient de dilatation thermique correspondant sensiblement à celui de l'embase. L'alliage métallique utilisé est de préférence un alliage à base de fer - nickel tel que le Kovar (marque déposée) et le Dilver P (marque déposée).

La paroi externe est montée de manière étanche sur l'embase en utilisant un scellement obtenu par fluage d'un fil ou d'un tore en indium.

D'autre caractéristiques et avantages apparaitront à la lecture de la description d'un mode de réalisation de la présente invention faite ci-après avec référence aux dessins ci-annexés dans lesquels:

- la figure 1 est une vue en perspective avec arrachement partiel d'un dispositif cryostatique conforme à la présente invention;

- la figure 2 est une vue en coupe par A-A de la figure 1;

- la figure 3 est une vue en coupe de l'embase, de la fenêtre et de la paroi externe représentant sur la partie gauche de la figure la réalisation du scellement des différents éléments et sur la partie droite le scellement réalisé.

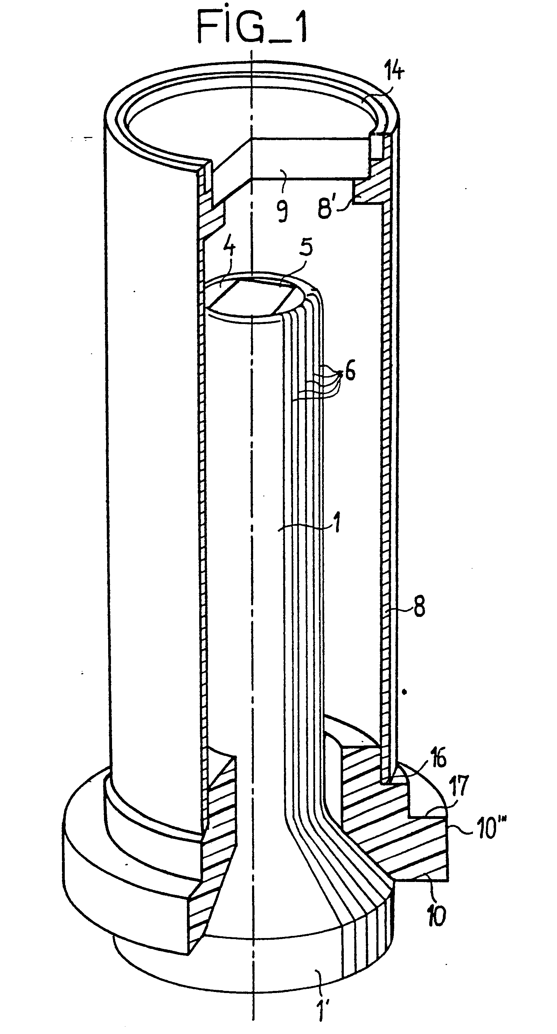

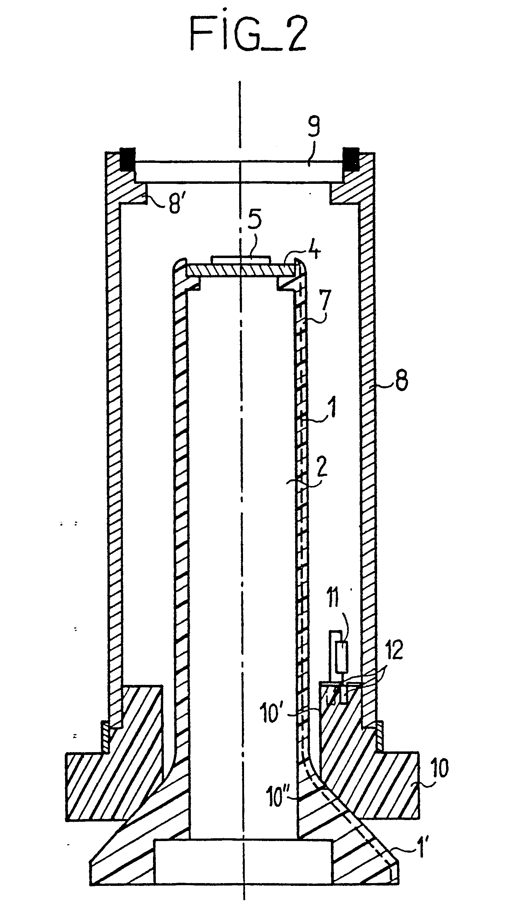

En se référant tout d'abord aux figures 1 et 2, la référence 1 désigne le doigt qui doit être porté à très basse température. Conformément à la présente invention, le doigt 1 est réalisé en une céramique étanche aux gaz à faible conductivité thermique telle que la forstérite, la zircone, la mullite, la stéatite. Toutefois, le doigt peut aussi être réalisé en une céramique poreuse rendue étanche, par exemple, par émaillage. Comme représenté sur les figures, le doigt 1 comporte une partie principale cylindrique qui est alésée pour recevoir dans son alésage 2 un cryogénérateur non représenté. Le cryogénérateur peut être constitué par tout cryogénérateur connu tel qu'une sonde à détente Joule Thomson.

Une des extrémités de la partie cylindrique se termine par une partie évasée en forme de cone 1 tandis que son autre extrémité est fermée par un fond ou table 4 sur lequel sont montés le ou les détecteurs 5. Selon un mode de réalisation, la table 4 peut recevoir une mosaïque de détecteurs comportant 32x32 éléments et présente un diamètre utile de 4 à 5 mm. La table portée à basse température par le cryogénérateur doit transmettre rapidement la chaleur. De ce fait, elle est réalisée en un matériau bon conducteur de la chaleur dont le coefficient de dilatation thermique est compatible avec celui du doigt 1.

En conséquence, la table est, de préférence, réalisée soit en métal tel que le platine, le cuivre, le molybdène, etc, soit en céramique telle que l'alumine, l'oxyde de beryllium, etc.

De plus, la table 4 est scellée de manière étanche sur la partie cylindrique du doigt 1 soit avec un émail ou une vitrocéramique adaptés.

Conformément à une autre caractéristique de la présente invention, la nappe de conducteurs 6 est déposée directement sur le doigt 1. Cette nappe de conducteurs 6 s'étend de la table froide 4 jusqu'à l'extrémité de la partie conique l'à savoir l'extérieur du dispositif cryostatique. Cette nappe de conducteurs peut être réalisée de différentes manières. A titre illustratif, nous décrirons ci-après différents procédés de réalisation de ladite nappe.

Ainsi la nappe de conducteurs peut être réalisée par dépôt d'une couche conductrice sur toute la surface externe du doigt. Ladite couche peut être formée par une couche mince obtenue, par exemple, par évaporation sous vide ou par une couche épaisse réalisée par enduction, projection ou tremper avec une pâte pour sérigraphie. Les conducteurs sont ensuite réalisés dans cette couche soit par usinage mécanique, soit par usinage au laser, soit par traçage avec une pointe dure ou encore par photolithogravure.

Selon une autre méthode de réalisation, la nappe de conducteurs peut être obtenue par évaporation sous vide à travers un masque ou par évaporation sous vide à travers une fente. Cette dernière méthode permet de faire varier le pas des conducteurs et, eventuellement, de former des conducteurs plus larges en les juxtaposant. Dans cette méthode, la fente est de préférence maintenue fixe, le doigt étant déplacé en rotation sous la fente après chaque évaporation à l'aide par exemple d'un moteur pas-à-pas.

Selon encore une autre méthode de réalisation de la nappe de conducteurs, le doigt 1 est muni, au moins dans la partie qui doit recevoir les conducteurs, de cannelures 7 (une de ces cannelures a été représentée en tiretés à titre illustratif sur la figure 2). Les cannelures 7 sont réalisées soit par moulage soit par usinage. De préférence, la largeur des cannelures correspond à la largeur des conducteurs et leur pas au pas des conducteurs. On dépose sur le doigt froid soit une couche épaisse de pâte à sérigraphier présentant une épaisseur de 9 à 10 µm, soit une couche mince chrome-or par exemple, obtenue par évaporation sous vide. On supprime ensuite la couche conductrice déposée sur les parties en relief par usinage a l'aide d'une meule ou d'une toile abrasive.

Dans les cas ci-dessus, les sorties des détecteurs 5 sont connectées directement à la nappe de conducteurs 6 soit par soudure aux ultrasons, soit par évaporation à travers un masque. De plus, comme expliqué ci-après, il n'est pas nécessaire d'utiliser des pièces isolantes suplémentaires pour faire sortir la nappe de conducteurs à l'extérieur du dispositif cryostatique.

Le dispositif cryostatique de la presente invention comporte une paroi externe 8 qui entoure le doigt 1 et sur laquelle est montée, sur la partie faisant face aux détecteurs 5, une fenêtre 9 réalisée en un matériau transparent aux rayonnements à détecter. La paroi 8 est constituée par une enveloppe cylindrique et comporte à une de ses extrémités une butée annulaire interne 8' destinée à recevoir la fenêtre 9. L'autre extrémité de la paroi externe 8 est montée sur une embase 10 elle-même scellée sur le doigt 1, l'ensemble formant une enceinte susceptible d'être mise sous vide. L'embase 10 est constituée par un manchon dont l'alésage central présente une partie cylindrique 10' se prolongeant par une partie conique 10'' correspondant à la partie conique 1' du doigt de manière à venir s'emboiter exactement sur cette dite partie. Conformément à l'invention, l'embase 10 est réalisée en un matériau électriquement isolant, présentant des propriétés mécaniques stables et précises et un coefficient de dilatation thermique équivalent à celui du doigt. En conséquence, l'embase est réalisée en céramique, de préférence dans la même céramique que celle du doigt 1 et elle est scellée sur la partie 1' du doigt à l'aide d'un émail ou d'une vitrocéramique, ce type de scellement laissant intacte la nappe de conducteurs 6 s'étendant sur la partie 1'. On obtient donc un passage direct de la nappe de conducteurs 6 à travers le scellement.

D'autre part, la fenêtre 9 est réalisée de préférence en germanium. La fenêtre 9 peut de manière conventionnelle être collée contre la butée 8' de la paroi 8. Toutefois, elle sera de préférence scellée sur cette butée en utilisant un fil d'indium comme cela sera expliqué en détail ci-après. La paroi 8 qui est aussi scellée sur l'embase 10 doit être réalisée en un matériau dont le coefficient de dilatation thermique est compatible avec celui de la fenêtre et de l'embase. Car bien que le scellement de ces éléments soit effectué à froid comme expliqué ci-après, dans la plupart des cas, les conditions d'utilisation sont telles que le matériel doit fonctionner dans une gamme de température très étendue comprise en général entre -40°C et +70°C tout en maintenant le scellement étanche. En conséquence, la paroi 8 est réalisée soit en céramique soit en un métal compatible tel que le platine soit en un alliage métallique à base de fer-nickel tel que le Kovar (marque déposée) et le Dilver P (marque déposée). Dans certains cas, la paroi 8 sera réalisée en un métal ou alliage magnétique pour assurer un blindage électromagnétique de protection des détecteurs.

De plus, l'embase étant réalisée en un matériau présentant des propriétés mécaniques précises qui peut être facilement usiné ou moulé, elle peut être facilement utilisée comme moyen de positionnement axial et rotationnel du dispositif cryostatique. Pour obtenir facilement le positionnement, le contour périphérique externe 10''' de l'embase est cylindrique et comporte un moyen d'indexation (non représenté sur les dessins) tel qu'une encoche ou une fente.

Toutefois il est évident pour l'homme de l'art que cette partie de l'embase pourrait présenter une forme polygonale, elliptique ou toute autre forme de révolution.

D'autre part au moins un getter 11 est implanté dans des trous 12 prévus dans l'embase 10. Le getter est destiné, lorsqu'il est activé, à maintenir le vide dans l'enceinte formée principalement par le doigt 1, l'embase 10 et la paroi externe 8. De plus, deux conducteurs sont déposés sur l'embase 10 pour relier les pattes du getter à une source extérieure permettant son activation par effet joule. Le getter est scellé dans le trou 12 soit en utilisant un émail soit en utilisant une pâte à sérigraphier qui assure en plus du scellement le contact électrique entre les conducteurs et les pattes.

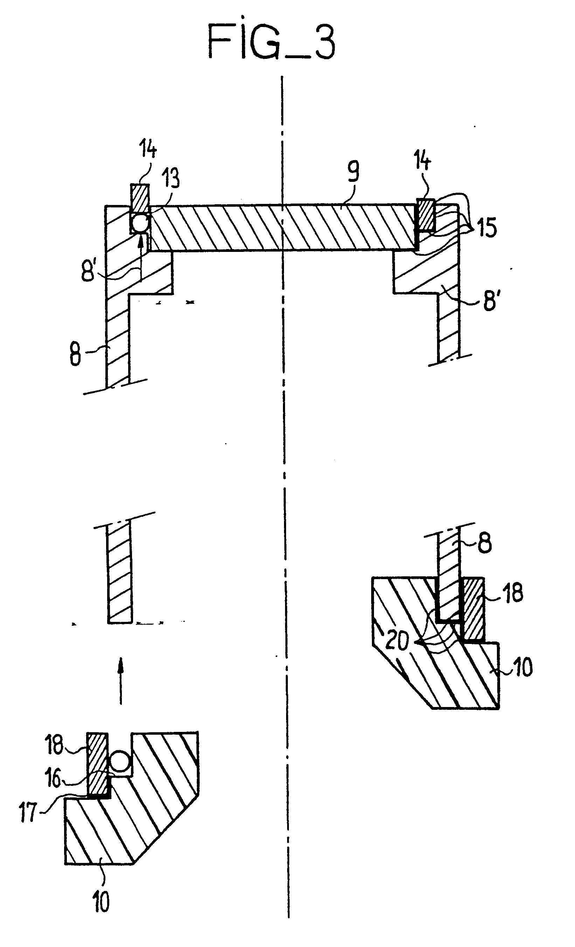

On décrira maintenant avec référence à la figure 3, le scellement de la fenêtre 9 sur la butée 8' de la paroi externe 8 et le scellement de la paroi 8 sur l'embase 10. Ce scellement est réalisé à froid en faisant fluer un fil d'indium dans un intervalle très petit. Dans le cas de la fenêtre 9, après mise en place de celle-ci contre la butée 8' de la paroi 8, on insère un fil d'indium 13 dans le jeu annulaire existant entre la fenêtre 9 et la paroi 8 puis on positionne un insert 14 sur le fil d'indium 13 et on enfonce l'insert afin de transformer le fil 13 en un film 15 qui remplit tout l'espace entre l'insert 14, la fenêtre 9 et la butée 8' comme représenté sur la partie droite de la figure 3.

Pour permettre le scellement de la paroi externe 8 sur l'embase 10, le manchon constituant l'embase 10 a été usiné ou moulé de sorte que sa surface extérieure présente deux décrochements 16, 17, le premier ayant une largeur sensiblement égale à l'épaisseur de la paroi 8. Une bague annulaire 18 est montée contre le décrochement 17 de manière à former une gorge, puis la paroi externe montée dans un bati de mise sous-vide est insérée et enfoncée dans la gorge, après pompage et étuvage de l'ensemble, de manière à faire fluer le fil d'indium et à le transformer en un film 20 qui remplit tout l'espace entre la bague 18, le décrochement 16 et l'embase 10.

On obtient ainsi un dispositif cryostatique qui peut présenter de très faibles dimensions tout en ayant un nombre de sorties élevées. Ainsi, selon un mode de réalisation le dispositif cryostatique présente un diamètre de 12 mm et une longueur inférieure à 40 mm avec 36 conducteurs en sortie.

Le dispositif cryostatique conforme à l'invention presente aussi l'avantage d'être simple, compact, précis avec un prix de revient réduit.

Il est évident pour l'homme de l'art que le dispositif cryostatique de la présente invention peut être muni de tout dispositif connu améliorant ses performances. Il trouve son utilisation en particulier dans les auto-directeurs infrarouges et dans les caméras portables infrarouges mais aussi dans tout matériel demandant des détecteurs refroidis de petites dimensions.

## Revendications

1. Dispositif cryostatique de faibles dimensions pour photodétecteurs du type comportant un doigt (1) porté à très basse température sur l'extrémité duquel est fixé au moins un détecteur (5), une embase (10) en un matériau difficilement déformable sur laquelle est scellé le doigt de manière à permettre le passage des conducteurs électriques et une paroi (8) montée sur l'embase et entourant le doigt froid pour former avec lui une enceinte sous vide, une fenêtre (9) en un matériau transparent aux rayonnements a détecter étant fixée sur la paroi (8) en face du détecteur, caractérisé en ce que le doigt froid (1) est réalise en une ceramique étanche ou étanchée à faible conductivité thermique du type choisi parmi la forstérite, la zircone, la mullite, la stéatite, l'embase (10) étant réalisée en un matériau isolant à coefficient de dilatation thermique du même ordre de grandeur que celui de la céramique du doigt.

2. Dispositif cryostatique selon la revendication 1, caractérisé en ce que, dans le cas d'une céramique poreuse, celle-ci est rendue étanche par émaillage.

3. Dispositif cryostatique selon l'une quelconque des revendications 1 et 2, caractérisé en ce que l'embase (10) est réalisée en céramique.

4. Dispositif cryostatique selon l'une quelconque des revendications 1 à 3, caractérisé en ce que le contour externe (10''') de l'embase est utilisé comme moyen de positionnement axial et rotationnel du dispositif cryostatique.

5. Dispositif cryostatique selon la revendication 4, caractérisé en ce que le contour externe (10''') est de forme polygonale ou de révolution et comporte un index de positionnement.

6. Dispositif cryostatique selon l'une quelconque des revendications 1 à 5, caractérisé en ce que les conducteurs (6) sont déposés directement sur le doigt froid (1) depuis l'extrémite support des détecteurs (5) jusqu'à l'extérieur du dispositif cryostatique.

7. Dispositif cryostatique selon l'une quelconque des revendications 1 à 6, caractérisé en ce que le doigt (1) est muni de cannelures (7).

8. Dispositif cryostatique selon l'une quelconque des revendications 1 à 7, caractérisé en ce que la paroi externe (8) du dispositif cryostatique est réalisée en une céramique, un métal ou un alliage métallique présentant un coefficient de dilatation thermique sensiblement égal à celui de l'embase (10).

9. Dispositif cryostatique selon la revendication 8, caractérisé en ce que le métal ou l'alliage métallique est un matériau magnétique.

10. Dispositif cryostatique selon l'une quelconque des revendications 8 et 9, caractérisé en ce que l'alliage métallique est un alliage a base de fer-nickel.

11. Dispositif cryostatique selon l'une quelconque des revendication 1 à 10, caractérisé en ce que le scellement de la paroi externe (8) sur l'embase (10) et/ou de la fenêtre (9) sur la paroi externe (8) est réalisé par fluage d'un fil ou d'un tore d'indium.

## Patentansprüche

1. Kryostatvorrichtung geringer Abmessungen für Photodetektoren, mit einem auf sehr niedriger Temperatur gehaltenen Finger (1), an dessen Ende mindestens ein Detektor (5) befestigt ist, mit einer Basis (10) aus einem nur schwer verformbaren Material, auf die der Finger so aufgeklebt ist, daß elektrische Leiter durchgeführt werden können, und mit einer Wand (8), die auf der Basis montiert ist und den kalten Finger umgibt, sodaß sie mit ihm eine Vakuumkammer bildet, wobei ein Fenster (9) aus einem für die zu entdeckende Strahlung durchlässigen Material an der Wand (8) gegenüber dem Detektor befestigt ist, dadurch gekennzeichnet, daß der kalte Finger (1) aus einer dichten oder abgedichteten Keramik mit geringer Wärmeleitfähigkeit, nämlich aus Forsterit, Zirkonoxid, Mullit oder Steatit, besteht, während die Basis (10) aus einem isolierenden Material mit einem Wärmeausdehnungskoeffizienten besteht, der in derselben Größenordnung wie der der Keramik des Fingers liegt.

2. Kryostatvorrichtung nach Anspruch 1, dadurch gekennzeichnet, daß bei Verwendung einer porösen Keramik diese durch Emaillierung dicht gemacht ist.

3. Kryostatvorrichtung nach einem beliebigen der Ansprüche 1 und 2, dadurch gekennzeichnet, daß die Basis (10) aus einer Keramik besteht.

4. Kryostatvorrichtung nach einem beliebigen der Ansprüche 1 bis 3, dadurch gekennzeichnet, daß der äußere Umriß (10''') der Basis als Mittel zur Positionierung der Kryostatvorrichtung in axialer und in Drehrichtung verwendet ist.

5. Kryostatvorrichtung nach Anspruch 4, dadurch gekennzeichnet, daß der äußere Umriß (10''') polygonal oder drehsymmetrisch geformt ist und einen Lage-Index aufweist.

6. Kryostatvorrichtung nach einem beliebigen der Ansprüche 1 bis 5, dadurch gekennzeichnet, daß die Leiter (6) direkt auf den kalten Finger (1) aufgebracht sind, und zwar von dem die Detektoren (5) tragenden Ende bis nach außerhalb der Kryostatvorrichtung.

7. Kryostatvorrichtung nach einem beliebigen der Ansprüche 1 bis 6, dadurch gekennzeichnet, daß der Finger (1) mit Riefen (7) versehen ist.

8. Kryostatvorrichtung nach einem beliebigen der Ansprüche 1 bis 7, dadurch gekennzeichnet, daß die Außenwand (8) der Kryostatvorrichtung aus Keramik, einem Metall oder einer Metallegierung besteht und einen Wärmeausdehnungskoeffizienten besitzt, der dem der Basis (10) im wesentlichen gleicht.

9. Kryostatvorrichtung nach Anspruch 8, dadurch gekennzeichnet, daß das Metall oder die Metallegierung ein magnetisches Material ist.

10. Kryostatvorrichtung nach einem beliebigen der Ansprüche 8 und 9, dadurch gekennzeichnet, daß die Metallegierung eine Legierung auf Eisen Nickelbasis ist.

11. Kryostatvorrichtung nach einem beliebigen der Ansprüche 1 bis 10, dadurch gekennzeichnet, daß das dichte Verkleben der Außenwand (8) auf der Basis (10) und/oder des Fensters (9) auf der Außenwand (8) durch Kriechverformung eines Drahts oder Rings aus Indium erfolgt.

## Claims

1. A cryostatic device of small dimensions for photodetectors, of the type comprising a finger (1) which is brought to a very low temperature and at the end of which at least one detector (5) is fixed, a support (10) made from a hardly deformable material to which the finger is sealed in such a manner as to allow the passage of electrical conductors, and a wall (8) mounted on the support and surrounding the cold finger for constituting with the latter a vacuum chamber, a window (9) made from a material transparent to the radiations to be detected being fixed to the wall (8) opposite to the detector, characterized in that the cold finger (1) is made of a tight or sealed ceramic material of low thermal conductivity, selected from the group consisting of forsterite, zirconium oxide, mullite and steatite, the support being made of an insulating material the thermal expansion coefficient of which is of the same ordre of magnitude than that of the finger ceramic material.

2. A cryostatic device according to claim 1, characterized in that in the case of a porous ceramic material the latter is sealed by enamelling.

3. A cryostatic device according to any one of claims 1 and 2, characterized in that the support (10) is made of a ceramic material.

4. A cryostatic device according to any one of claims 1 to 3, characterized in that the outer contour (10''') of the support is used as a means for axially and rotationally positionning the cryostatic device.

5. A cryostatic device according to claim 4, characterized in that the outer contour (10''') has a polygonal or a round shape and comprises a positionning index.

6. A cryostatic device according to any one of claims 1 to 5, characterized in that the conductors (6) are directly deposited on the cold finger (1) and extend from the end bearing the detectors (5) to the outside of the cryostatic device.

7. A cryostatic device according to any one of claims 1 to 6, characterized in that the finger (1) is provided with grooves (7).

8. A cryostatic device according to any one of claims 1 to 7, characterized in that the outer wall (8) of the cryostatic device is made of a ceramic, metal or metal alloy material, the thermal expansion coefficient of which is substantially equal to that of the support (10).

9. A cryostatic device according to claim 8, characterized in that the metal or metal alloy is a magnetic material.

10. A cryostatic device according to any one of claims 8 and 9, characterized in that the metal alloy is an alloy on the basis of iron-nickel.

11. A cryostatic device according to any one of claims 1 to 10, characterized in that the sealing of the outer wall (8) to the support (10) and/or of the window (9) to the outer wall (8) is made by creeping a wire or a ring of indium.

# FIG_1

# FIG_2

# FIG_3